# EUROPEAN PATENT SPECIFICATION

(11) **EP 1 690 311 B1**
(45) Date of publication and mention of the grant of the patent: **14.07.2010**
(21) Application number: 04798042.0
(22) Date of filing: 19.11.2004
(51) Int. Cl.: H01M 8/02, H01M 8/04

(54) **MODIFIED GAS OUTLET FOR IMPROVED REACTANT HANDLING IN FUEL CELL SEPARATOR PLATES**
MODIFIZIERTER GASAUSLASS FÜR VERBESSERTE REAKTIONSMITTELHANDHABUNG IN BRENNSTOFFZELLEN-TRENNPLATTEN
SORTIE DE GAZ MODIFIEE FACILITANT LA MANIPULATION DU REACTIF DANS DES PLAQUES DE SEPARATION DE PILE A COMBUSTIBLE

(30) Priority: 21.11.2003 US 524257 P
(43) Date of publication of application: 16.08.2006
(73) Proprietor: IRD FUEL CELLS A/S, 5700 Svendborg (DK)
(72) Inventor: FREDERIKSEN, Henning, DK-5700 Svendborg (DK); GRAHL-MADSEN, Laila, DK-5874 Hesselager (DK); LUNDSGAARD, Joergen, Schjerning, DK-5700 Svendborg (DK); THOMAS, David, Morgan, DK-5771 Stenstrup (DK)
(74) Representative: Peebles, Katrina
(86) International application number: PCT/EP2004/013246
(87) International publication number: WO 2005/055348

(56) References cited:
- EP-A- 1 220 347
- EP-A- 1 231 657
- EP-A- 1 291 951
- EP-A- 1 349 224
- US-A- 5 108 849
- SCOTT K ET AL: "Engineering aspects of the direct methanol fuel cell system" JOURNAL OF POWER SOURCES, ELSEVIER SEQUOIA S.A. LAUSANNE, CH, vol. 79, no. 1, May 1999 (1999-05), pages 43-59, XP004164162 ISSN: 0378-7753

## Description

### INTRODUCTION

This patent application claims the benefit of priority from U.S. Provisional Application Serial No. 60/524,257, filed November 21, 2003, which is herein incorporated by reference in its entirety.

### BACKGROUND OF THE INVENTION

The anode side of a fuel cell, supplies the fuel while the cathode side of a fuel cell, supplies oxygen via.an air stream The porous layer resting on each side of the: electrodes acts as a gas diffusion layer, which enables the reactant gas to reach the:reactive sites at the electrode, and conducts electrons away from the anode to the external circuit. The cell separator plates of the fuel cell conduct heat away from the membrane electrode assembly (MEA) and are used for removal of the water produced by the electrochemical reaction on the cathode side.

The handling of the psychometric challenges involving water removal is complex.:The ionic conductivity of the electrolyte membrane depends on its water content. A high conductivity is associated with at high water content, and the humidity of the polymer electrolyte: is thus kept close to saturation at the temperature of the: electrode. A reduction in water content of the electrolyte membrane, possibly even dried out electrode areas:, causes uneven current distribution in the MEA. The fuel cell performance is thus adversely affected due to the reduced local efficiency. Severe loss of water may ultimately cause gross malfunction of the fuel cell.

The water vapor formed on the cathode side has a tendency to condense as heat is transferred away from the cell and the exhausting air stream is near saturation. The liquid water forms droplets, which are entrained and tend to accumulate on impingement, thereby creating a risk of blocking air channels in the flow field of the separator plate. Sufficient air is then unable to reach the reactive zones of the MEA via the blocked channels resulting in a loss of efficiency. Some of the water is entrained by the air stream in the channels, and finally reaches the channel exiting to the exhaust manifold.

Excess water can also cause problems on the anode side, since water diffuses through the PEM layers from the point of origin on the cathode, to the anode. Thus, water blockage of the active sites may also occur on the anode site.

A diffuser functions hydrodynamically to accelerate the gas stream so that water does not accumulate in the channels. This involves acceleration of the gas stream in order to facilitate ejection of entrained water into the manifold air stream. It is thus the function of the "diffuser" to achieve dimensional conformity with the manifold geometry and to ensure that as little water as possible is left in the flow field to block the gas flow. The diffuser thus serves as an entrainment enhancer for water in spite of the tendency of disentrainment through water impingement at the geometrical constraint.

Accumulation of water in the channels of the electrode separator plates is a problem that has received considerable attention. Solutions to the problem primarily rely upon the design of the flow field. The aim of these designs is oftentimes maintaining a steady gas flow through all the channels by controlling the differential pressure between the inlet and outlet of the flow field. Simply increasing the gas flow by increasing the inlet pressure, however, is not a viable option since this requires compression energy and is un-economical.

Contrary to the attention on flow field design, the design of the gas outlets has been largely ignored. The gas outlet of a fuel cell typically comprises a wide passage of constant geometry from the flow field to the exhaust channel with a few straight ribs needed to ensure mechanical integrity. The reduced pressure drop across the outlet causes a significant reduction in air velocity and thus a reduction of the force applied to the excess water droplets traveling from the reaction zones covered by-the flow field, to the exhaust channels.

Alternatively, the gas outlet comprises a continuation of the flow channels from the flow field to the exhaust channel such as taught in U.S. Patent 5,108,849. In this design, the channel dimensions in the outlet are identical to the channels in the flow field and proceed in a straight line from the flow field to the exhaust channel. In this gas outlet design the problems of water adhesion known from the flow field persist until the outlet is reached and no enhancement of the ejection function is obtained in the design.

Formation of water droplets in the gas outlet does not directly impede the fuel cell performance since they are outside the active area of the MEA. However, this formation does affect and cause undesirable variation in the gas flow. This reduction in the gas flow may lead to problems such as insufficient fuel for the electrochemical reaction. Further, the lower gas flow may result in formation of condensed water agglomerations. Consequently, accumulation of liquid water in the gas outlets has an adverse effect on the overall performance of the fuel cell. Thus, water accumulation in the flow field is recognized as having a profound effect on the current efficiency and fuel cell performance.

EP 1 231 657 discloses a polymer electrolyte fuel cell comprising an anode-side conductive separator plate having gas flow channels for supplying a fuel gas to the anode, and a cathode-side conductive separator plate having gas flow channels for supplying an oxidant gas to the cathode, wherein the anode-side and cathode-side conductive separator plates have a substantially rectangular part in contact with the anode or cathode, and the oxidant gas flow channels have a linear part formed along the longer side of the rectangular part.

### SUMMARY OF THE INVENTION

It is an object of the present invention to prevent decreasing airflow in flow channels of a fuel cell by providing means to maintain turbulent air flow through the length of the outlet channel and to counteract the coalescence of condensed water droplets and the formation of water agglomerations which restrict passage through the outlet.

According to an aspect of the present invention, there is provided a gas outlet for an electrode separator plate having a flow field, said gas outlet comprising a channel having: a gas entry orifice for receiving a gas flow from said flow field; a channel section; and an outlet orifice forming a manifold entrance for exhausting said gas; **characterised in that** the cross sectional area of said channel section is constrained towards and relative to said outlet orifice.

Conveniently, the channel section comprises a change in width for constraining its cross sectional area.

Conveniently, the width of said channel section is gradually decreased by approximately 10% at the outlet orifice relative to the entry orifice.

Conveniently, the channel section comprises a change in height for constraining its cross sectional area.

Conveniently, the channel section comprises a change in depth for constraining its cross sectional area.

Conveniently, the channel section depth is reduced increasingly in a vertical direction from the entry orifice to the outlet orifice.

Conveniently, the channel section comprises one or more obstructions configured to constrain said channel cross section for thereby obstructing the passage of an air/water mixture and raising turbulence in the gas flow.

Conveniently, said one or more obstructions are provided throughout the channel section.

Conveniently, the cross sectional area of the channel section is constrained by altering two or more of the width, height, depth and obstruction provision in the channel section.

Conveniently, the channel section comprises a plurality of straight channels continuous from the grooves of said flow field, said grooves ending in the outlet orifice.

Accordingly, the present invention provides an improved electrode separator plate gas outlet that promotes release of accumulated water from the membrane electrode assembly (MEA). The improved electrode separator plate gas outlet of the present invention is designed to minimize or prevent water accumulation from occurring in the gas outlet from the cathode side, in the volume between the flow field of the separator plate, and the manifold or exhaust channel. The function of the present invention is independent of the actual flow field design. That is, although different designs of the flow field will cause varying fuel cell performance, the improved electrode separator gas outlets address primarily the deleterious affects of water accumulation near the gas exit to the manifold and the need to expedite the purging of condensed water from the flow fields of the separator plate. Accordingly, the improved electrode separator plate functions as well with simple straight flow cell designs as serpentine patterns, zigzag patterns or other types of channel patterns used conventionally by persons versed in the art.

Various embodiments of the improved electrode separator plate gas outlet have been designed wherein the width of the gas outlet, the height of the gas outlet, the air/water flow and/or velocity and/or the configuration of obstacles which obstruct the passage of the air/water mixture and raise turbulence in the gas flow have been modified as compared to standard gas outlets.

The improved electrode separator plate gas outlets are applicable to both anode and cathode separator plates.

### BRIEF DESCRIPTION OF THE DRAWINGS

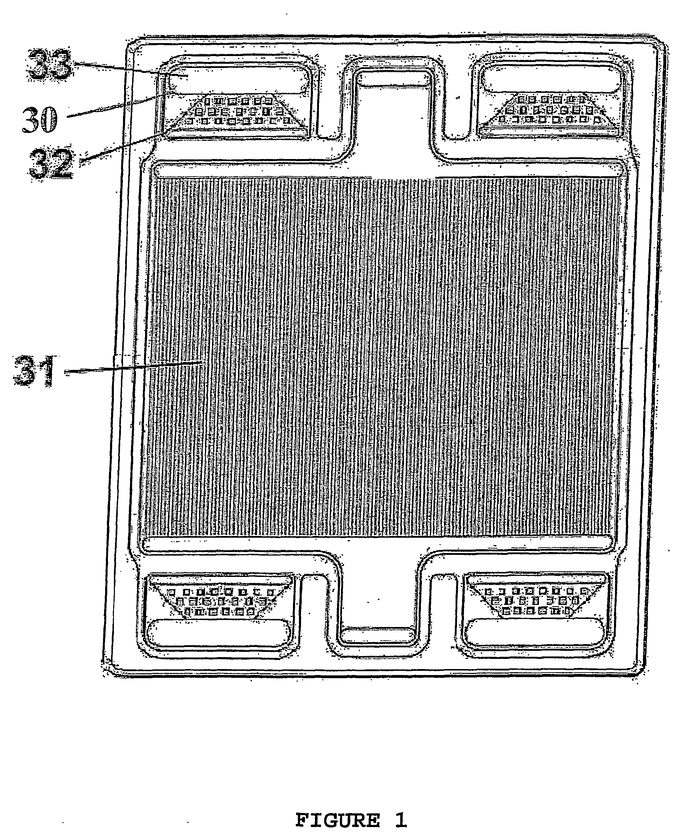

Figure 1 is a complete separator plate for a fuel cell cathode, showing the flow field (31), and a gas outlet modified in accordance with the present invention with a channel 30 extending from a gas entry orifice 32 to a manifold entrance 33.
Figure 2A and B show a standard electrode separator plate gas outlet. Figure 2A shows the entire outlet. Figure 2B shows a sideview of the area between the groove exits and the manifold entrance.
Figure 3A through 3I show various embodiments of modified electrode separator plate gas outlets of the present invention.

### DETAILED DESCRIPTION OF THE INVENTION

The present invention relates to improved electrode separator plate gas outlets which are modified in comparison to standard gas outlets to increase gas flow velocity, thereby promoting release of trapped water droplets in the flow field and gas outlet.

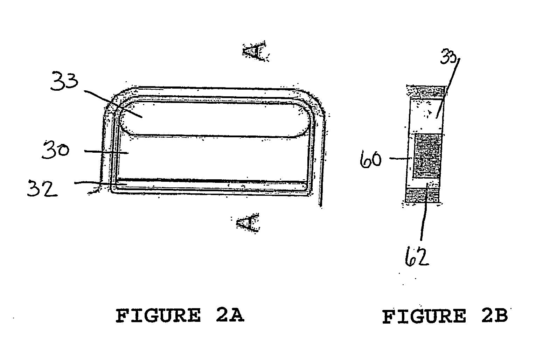

By "standard gas outlet" as used herein, it is meant a simple rectalinear recess having sufficient volume to accommodate any free water accumulation and to provide space for formation of an alternative route for escaping gas used routinely in most electrode separator plates. An example of a standard gas outlet is depicted in Figures 2A and 2B.

When the air/water mixture leaves the constraints of the flow field and enters the gas outlet area of a standard separator plate, the channel volume increases significantly. The effect of the ensuing reduction in gas velocity is to promote water disentrainment due to the deceleration of the suspended phase water droplets in the gas continuum. Conversely accelerating the continuum velocity tends to increase the entrainment tendency. A reduction of the air speed relative to the speed of travel of entrained droplets results in increased effect of the momentum of the water particle to maintain a potentially deleterious track and impinge on a solid surface that it may be directed to. Conversely a high relative velocity difference between gas continuum and suspended phase enables the gas to dominate in any momentum transfer to the suspended particle. This causes the particle to tend to be redirected in the direction of the gas flow and therefore the tendency to disentail is reduced and entrainment enhanced.

Accordingly, in the improved electrode separator plate gas outlets of the present invention, the design of a standard gas outlet has been modified in various manners to provide for a higher relative velocity difference between the gas continuum and suspended phase. For example, in one embodiment the width of the channel 30 is gradually reduced in size from gas entry orifice 32 to manifold entrance 33. That is from a starting width and section at the termination of the flow field proper, referred to herein as the gas entry orifice 32, the extents in terms of width and free channel thicknesses are gradually constrained towards the manifold entrance 33 of the channel. Gas velocity correspondingly increases in this design modification directing condensed water droplets towards the manifold entrance and the exhaust manifold.

In an alternative embodiment, a higher continuum gas velocity is achieved by placing obstacles in the channel 30. The configuration of the obstacles is such that the cross-section of the channel 30 is constrained towards the manifold entrance 33 and the obstacles may be arranged to induce turbulence by disturbing the flow. Reynolds numbers for the flow can be calculated so that turbulence can be quantified and defined.

Thus, by "modified" or modification" as used herein with respect to a separator plate gas outlet it is meant to include, but is not limited to, a change in width of the channel, height of the channel, depth of the channel or configuration of obstacles which obstruct passage of an air/water mixture and raise turbulence in gas flow through the channel as compared to a standard gas outlet.

Flow field separator plates are made of materials that are known to those versed in the art. Exemplary materials include, but are not limited to graphites and other corrosion resistant materials such as graphite/binder composites (supplied as SIGRACET Bipolar Plate BMA 5 by SGL Carbon, Meitingen, Federal Republic of Germany), metal/binder composites, corrosion resistant steel, or less resistant metals coated with a corrosion resistant metal such as gold or platinum. Composites may furthermore contain additional chemically inert materials including, but not limited to, boron nitride, silicon carbide etc., or consist of combinations of the above-mentioned material compositions. Polymers such as thermoplastics, polyvinylidene fluoride, Teflon (PTFE) may be used as binders. The modified electrode separator plate gas outlets of the present invention can be implemented into these flow field separator plates by any conventionally used method of shaping the separator plate such as molding, milling or grinding.

Further, the improved electrode separator plate gas outlet plates can-be applied to any type of separator plates irrespective of design, i.e. whether the design is bipolar or non-bipolar. Further, their use is not limited to separator plates made of graphite or to hydrogen solid polymer electrolyte fuel cells. A person skilled in the art, will understand upon reading the instant disclosure that the improved electrode separator plate gas outlets of the present invention may find use in other types of fuel cells employing e.g. metal separator plates and/or in fuel cells which use other types of hydrogen providing fuels, e.g. methanol, and that many modifications are possible in the embodiments described above, without departing from the teachings thereof.

Various embodiments of gas outlet designs used in the modified electrode separate plate gas outlets of the present invention are demonstrated in the following nonlimiting examples.

### EXAMPLE

### Example 1:

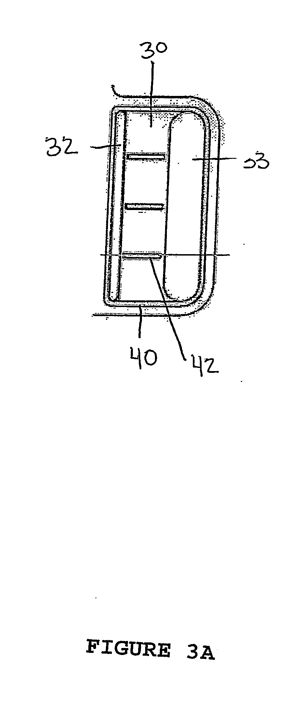

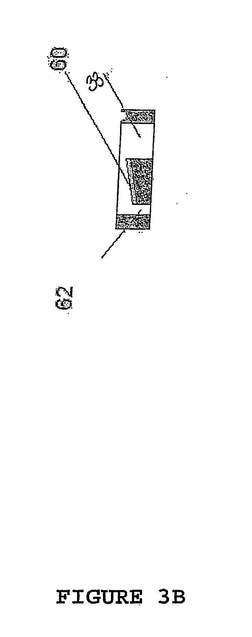

This embodiment of an improved electrode separator plate gas outlet is one of the simplest possibly designs and is depicted in Figure 3A and 3B. In this embodiment, the gas outlet channel 30 is simply a flat, open channel with straight, parallel sides 40, which extend from the gas entry orifice 32 and end at the manifold entrance 33. Support beams 42 are used to support the structure mechanically since it has to endure the stack pressure without rupture. The design shown provides an increase in flow velocity by reducing channel depth in vertical direction from the gas entry orifice to the manifold entrance. As shown in Figure 3B, the area 60 between the groove exits 62 and the manifold entrance 33 is reduced in depth increasingly. This can be contrasted with Figure 2B showing the same area 60 in a standard gas outlet wherein the depth is equal. In this example, the reduction in depth is from 0.8 mm to 0.5 mm. However, as will be understood by those of skill in the art, varying reductions in depth can be used.

### Example 2:

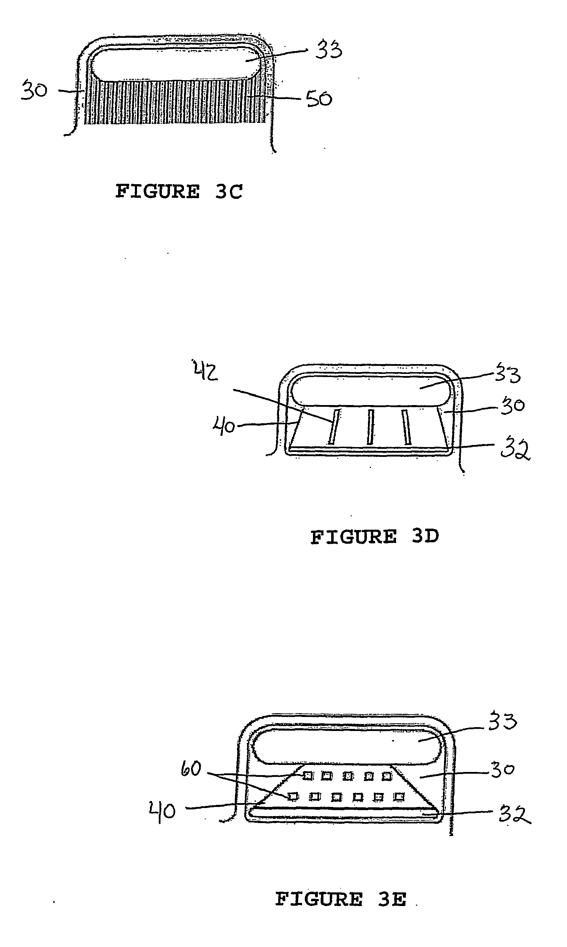

This embodiment of a modified electrode separator plate gas outlet of the present invention is depicted in Figure 3C and comprises a plurality of straight grooves 50 which are a continuation of the grooves of the flow field in the back plate and which end in the manifold entrance 33. In this embodiment, the high Reynolds number associated with gas flowing through the grooves is maintained all the way up to the manifold entrance.

### Example 3:

This embodiment of a modified electrode separator plate gas outlet of the present invention utilizes the flow velocity increase achieved by lateral constraint of the channel width and is depicted in Figure 3D. The width is gradually decreased by approximately 10% at the manifold entrance of the channel as compared to the gas entry orifice by angling of the channel sides 40. Support beams 42 are used in this embodiment as well.

### Example 4:

In this embodiment of an improved electrode separator plate gas outlet of the present invention depicted in Figure 3E, the support beams are replaced by a plurality of obstructions 60 that obstruct airflow through the channel. In this embodiment, the sides 40 of the channel are angled to provide a configuration wherein the proportion of the lateral dimension of the channel taken up by the obstructions increases as the gas is transported from the gas entry orifice 32 to the manifold entrance 33. The resulting promotion of turbulence assists in alleviating the effects of water accumulation and pool formation in the channel 30.

### Example 5:

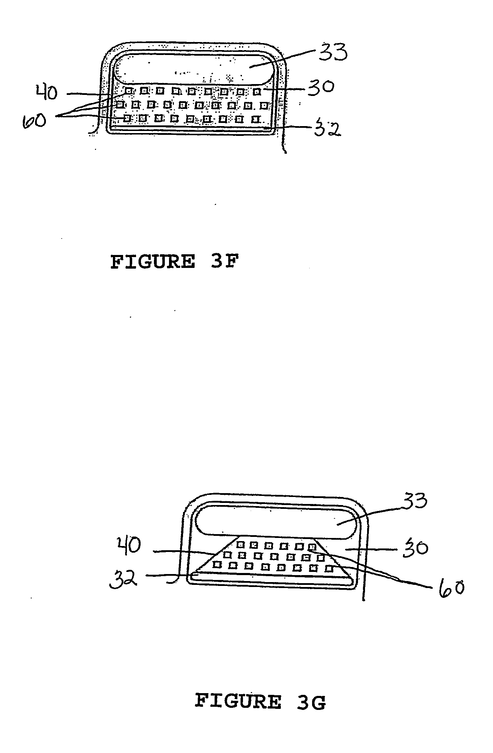

This embodiment of an improved electrode separator plate gas outlet of the present invention depicted in Figure 3F employs straight sides 40 in the channel 30, and identical obstructions arranged in three rows. Thus the effective-cross sectional area available for the gas stream is reduced as compared to standard gas outlets and air velocity increases as the air stream traverses the channel towards the manifold entrance 33. The arrangement of obstructions is stepped in order to aid the persistence of terminal flow. At the same time flow velocity can be raised by reducing the channel thickness towards the manifold entrance.

### Example 6:

This embodiment of an improved electrode separator plate gas outlet of the present invention depicted in Figure 3G uses a combination of a narrowing channel 30 with angled sides 40 and an increasing number of obstructions at the gas entry orifice as compared to the manifold entrance. The obstructions may be of variable size and shape and are arranged to maintain high turbulence in the gas stream. In this embodiment, the obstructions have a quadratic form and are arranged in a straddling pattern in a narrowing channel with a lateral constriction to 50% of the original width.

### Example 7:

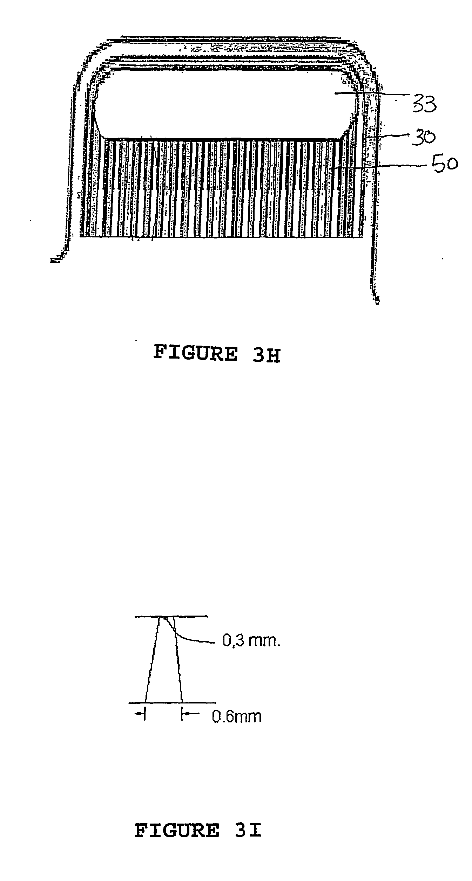

In this embodiment of an improved electrode separator plate gas outlet depicted in Figure 3H the embodiment of Example 2 is modified by reducing the diameter of the grooves 50 from the gas entry orifice 32 to the manifold entrance (see Figure 3I). In this embodiment conical grooves are formed in the area between the gas entry orifice and the manifold entrance. The diameter of the grooves may be reduced by machining on a programmable milling machine so that groove diameter is reduced from 0.6 mm to 0.3 mm at the manifold entrance thus providing the constraint needed to enhance the entrainment of water at the exit outlet.

### Example 8:

The effect of the modified design of the improved electrode separator plate gas outlets on the fuel cell performance was examined by comparing the fuel-cell output voltage as function of time, under a constant current load of 0.5 mA/cm². In this comparison test a fuel cell fitted with the design as described in Example 4 and a design as described in Example 1 were compared. The reactants were fed into the fuel cells at ambient pressure at flow rates corresponding to λair = 2.0 and λH₂ = 1.5, where λ = 1 corresponds to a gas flow which provides the stoichiometric amount of active gas for the electrochemical reaction An excess amount of gas is necessary to remove reaction products. The temperature of operation was 70°C in both cases. The two fuel cells were identical with the exception of the outlet channel designs, and were tested under identical conditions. In both cases, identical designs were used for the air and the hydrogen outlets.

## Claims

1. A gas outlet for an electrode separator plate having a flow field(31), said gas outlet comprising a channel (30) having:
a gas entry orifice (32) for receiving a gas flow from said flow field;
a channel section; and
an outlet orifice (33) forming a manifold entrance for exhausting said gas;
**characterised in that** the cross sectional area of said channel section is constrained towards and relative to said outlet orifice (33).

2. A gas outlet according to claim 1, wherein the channel section comprises a change in width for constraining its cross sectional area.

3. A gas outlet according to claim 2, wherein the width of said channel section is gradually decreased by approximately 10% at the outlet orifice (33) relative to the entry orifice (32).

4. A gas outlet according to any preceding claim, wherein the channel section comprises a change in height for constraining its cross sectional area.

5. A gas outlet according to any preceding claim, wherein the channel section comprises a change in depth for constraining its cross sectional area.

6. A gas outlet according to claim 5, wherein the channel section depth is reduced increasingly in a vertical direction from the entry orifice (32) to the outlet orifice (33).

7. A gas outlet according to any preceding claim, wherein the channel section comprises one or more obstructions (60) configured to constrain said channel cross section for thereby obstructing the passage of an air/water mixture and raising turbulence in the gas flow.

8. A gas outlet according to claim 7, wherein said one or more obstructions (60) are provided throughout the channel section.

9. A gas outlet according to claim 1, wherein the cross sectional area of the channel section is constrained by altering two or more of the width, height, depth and obstruction provision in the channel section.

10. A gas outlet according to any preceding claim, wherein the channel section comprises a plurality of straight channels (50) continuous from the grooves of said flow field, said grooves ending in the outlet orifice (33).

## Patentansprüche

1. Ein Gasauslass für eine Elektrodentrennplatte mit einem Strömungsfeld (31), wobei das genannte Strömungsfeld einen Kanal (30) aufweist, der aus Folgenden besteht:
einer Gaseinlassöffnung (32) zur Aufnahme des Gasstroms aus dem genannten Strömungsfeld;
einem Kanalabschnitt; und
einer Auslassöffnung (33) die zum Ablass des genannten Gases eine Verteileröffnung bildet;
**dadurch gekennzeichnet, dass** die Querschnittfläche des genannten Kanalabschnitts auf die genannten Auslassöffnung (33) hin zuläuft und relativ zu dieser verläuft.

2. Ein Gasauslass gemäß Anspruch 1, wobei der Kanalabschnitt zur Reduktion seiner Querschnittfläche eine Änderung in der Breite aufweist.

3. Ein Gasauslass gemäß Anspruch 2, wobei die Breite des Kanals im Vergleich zur Einlassöffnung (32) relativ zur Auslassöffnung (33) allmählich um ca. 10% abnimmt.

4. Ein Gasauslass gemäß eines der vorangegangenen Ansprüche, wobei der Kanalabschnitt zur Reduktion seiner Querschnittfläche eine Änderung in der Höhe aufweist.

5. Ein Gasauslass gemäß eines der vorangegangenen Ansprüche, wobei der Kanalabschnitt zur Reduktion seiner Querschnittfläche eine Änderung in der Tiefe aufweist.

6. Ein Gasauslass gemäß Anspruch 5, wobei die Tiefe des Kanalabschnitts von der Eingangsöffnung (32) zur Auslassöffnung (33) zunehmend in vertikaler Richtung reduziert wird.

7. Ein Gasauslass gemäß eines der vorangegangenen Ansprüche, wobei der Kanalabschnitt eine oder mehrere Obstruktionen (60) enthält, die so konfiguriert sind, dass sie den Querschnitt des genannten Gaskanals reduzieren und somit den Durchfluss der Gas-/Wassermischung hemmen und die Turbulenz im Gasstrom erhöhen.

8. Ein Gasauslass gemäß Anspruch 7, wobei die genannte eine oder genannten mehreren Obstruktionen (60) im gesamten Kanalabschnitt vorgesehen sind.

9. Ein Gasauslass gemäß Anspruch 1, wobei die Querschnittfläche des Kanalabschnitts durch Änderung von zwei oder mehr der folgenden, d.h. Breit, Höhe, Tiefe und Obstruktionen im Kanalabschnitt, reduziert wird.

10. Ein Gasauslass gemäß eines der vorangegangenen Ansprüche, wobei der Kanalabschnitt eine Reihe von gerade Kanälen (50) umfasst, die ununterbrochen von den Rillen des genannten Strömungsfeld verlaufen, wobei die genannten Rillen in der Auslassöffnung (33) enden.

## Revendications

1. Sortie de gaz destinée à une plaque de séparation d'électrodes possédant un champ de flux (31) ladite sortie de gaz comprenant un canal (30) ayant :
un orifice d'entrée du gaz (32) pour la réception d'un flux gazeux à partir dudit champ de flux ;
une section de canal ; et
un orifice de sortie (33) formant une entrée de collecteur pour l'échappement dudit gaz ;
**caractérisée en ce que** la zone d'écoulement de ladite section de canal est contrainte en direction et par rapport audit orifice de sortie (33).

2. Sortie de gaz selon la revendication 1, dans laquelle la section de canal comprend un changement de largeur pour la contrainte de sa zone d'écoulement.

3. Sortie de gaz selon la revendication 2, dans laquelle la largeur de ladite section de canal est graduellement diminuée d'approximativement 10% au niveau de l'orifice de sortie (33) par rapport à l'orifice d'entrée (32).

4. Sortie de gaz selon l'une quelconque des revendications précédentes, dans laquelle la section de canal comprend un changement de hauteur pour la contrainte de sa zone d'écoulement.

5. Sortie de gaz selon l'une quelconque des revendications précédentes, dans laquelle la section de canal comprend un changement de profondeur pour la contrainte de sa zone d'écoulement.

6. Sortie de gaz selon la revendication 5, dans laquelle la profondeur de la section de canal est diminuée de plus en plus dans une direction verticale à partir de l'orifice d'entrée (32) jusqu'à l'orifice de sortie (33).

7. Sortie de gaz selon l'une quelconque des revendications précédentes, dans laquelle la section de canal comprend une obstruction (60) ou plus configurée(s) pour contraindre ladite section d'écoulement de manière à obstruer par ce moyen le passage d'un mélange air/eau et à augmenter la turbulence dans le flux gazeux.

8. Sortie de gaz selon la revendication 7, dans laquelle ladite une obstruction (60) ou plus est(sont) prévue(s) dans l'ensemble de la section de canal.

9. Sortie de gaz selon la revendication 1, dans laquelle la zone d'écoulement de la section de canal est contrainte par le changement de deux ou plus de la largeur, de la hauteur, de la profondeur et par la prévision d'une obstruction ou plus dans la section de canal.

10. Sortie de gaz selon l'une quelconque revendication précédente, dans laquelle la section de canal comprend une pluralité de canaux rectilignes (50) continus à partir des gorges dudit champ de flux, lesdites gorges se terminant dans l'orifice de sortie (33).
